# EUROPÄISCHE PATENTSCHRIFT

(11) **EP 2 213 158 B1**
(45) Veröffentlichungstag und Bekanntmachung des Hinweises auf die Patenterteilung: **08.08.2018**
(21) Anmeldenummer: 10150913.1
(22) Anmeldetag: 16.01.2010
(51) Int. Cl.: A01G 9/02

(54) **Abdeckung für eine Wand**
Covering for a wall
Couverture pour un mur

(30) Priorität: 28.01.2009 AT 1442009
(43) Veröffentlichungstag der Anmeldung: 04.08.2010
(73) Patentinhaber: Haas, Karl Sascha, 1210 Wien (AT)
(72) Erfinder: Haas, Wolfgang, 1210 Wien (AT); Haas, Karl Sascha, 1210 Wien (AT)
(74) Vertreter: Haas, Franz

(56) Entgegenhaltungen:
- AT-B- 375 999
- DE-A1- 3 420 037
- DE-A1- 3 715 777
- DE-U1- 20 221 008
- GB-A- 2 239 155

## Beschreibung

Die Erfindung betrifft eine Abdeckung für eine Wand mit wenigstens zwei Trögen, wobei jeder Trog eine mit der Gebäudewand verbindbare Rückwand und einen abstehenden Trogsteg umfasst und wobei eine obere Kante des Trogstegs höher liegt als der Troggrund des zugehörigen Trogs, wobei Rückwand und Trogsteg jedes Trogs als ein Kunststoff- oder Metallprofil ausgebildet sind und wobei von jeder Rückwand oben ein Dichtungssteg absteht.

Bepflanzungen von Wänden, insbesondere Gebäudewänden, sind seit langem bekannt. So kennt man beispielsweise Bepflanzungen mit Kletterpflanzen, wobei an einer Gebäudewand beispielsweise Rankgitter oder sonstigen Vorrichtungen angebracht sind.

Daneben kennt man gattungsgemäße Abdeckungen mit Pflanztrögen, wobei in diesen ein Pflanzsubstrat eingebracht ist. So beschreibt beispielsweise die DE 32 22 715 A1 Pflanztröge, die übereinander an einer Wand angeordnet sind. Die einzelnen Pflanztröge sind dabei entweder stapelbar, nach vorne offen aufeinander gesteckt oder einzeln in an einer Wand befestigten Verblendungen eingehängt.

Verschiedene Abdeckungen mit Pflanztrögen sind auch aus der DE 34 20 037 A1 bekannt. Die Pflanztröge bestehen aus rinnenförmigen Formelementen, die übereinander an einer Wand angeordnet sind, wobei die gegenseitigen Anschlussstellen einander angepasste Ausformungen zur Abdichtung gegenüber der Wand aufweisen.

Die DE 37 15 777 A1 zeigt Pflanzelemente aus Blech, welche übereinander angeordnet und zur Aufnahme von Wurzelmatten vorgesehen sind. Die Pflanzelemente haben die Form eines nach vorne offenen Kastens.

Des Weiteren kennt man Abdeckungselemente, die über- oder nebeneinander an einer Wand montierbar sind und die mehrere Pflanztröge bzw. Pflanztaschen pro Element aufweisen. Ein Element mit Pflanztaschen ist beispielsweise in der DE 292 12 59 A1 beschrieben. Die DE 195 31 647 A1 offenbart ein Element mit einer Rückwand, die mit einer Gebäudewand verbindbar ist. Die Rückwand bildet einen hinteren Wandungsteil wenigstens eines Pflanztrogs, dessen vorderer Wandungsteil durch einen abstehenden Trogsteg gebildet ist, dessen freie Kante höher liegt als der Troggrund des Pflanztrogs.

In der Regel dient eine Bepflanzung einer Wand mittels Pflanztrögen einerseits als optische Verschönerung und andererseits als wärmedämmende Maßnahme. Letztere wird im Sommer durch einen kühlenden Effekt begleitet, welcher durch die Verdunstung der in den Pflanztrögen gespeicherten Feuchtigkeit entsteht. Zudem ist ein ökologischer Vorteil gegeben, da im Ausgleich zu einer verbauten Fläche eine neue vertikale Grünfläche entsteht.

Die bekannten Wandabdeckungen mit Pflanztrögen haben entweder den Nachteil, dass sie teuer in der Herstellung sind oder einer aufwendigen Montage bedürfen. Zudem besteht oft das Problem der Schimmelbildung zwischen einer Wand und einer Abdeckung, weil die aus einem Gebäude durch die Wand nach außen dringende Feuchtigkeit nicht entweichen kann, wenn die Abdeckung eine abdichtende Schicht darstellt.

Der Erfindung liegt die Aufgabe zugrunde, für eine Abdeckung der eingangs genannten Art eine Verbesserung gegenüber dem Stand der Technik anzugeben.

Erfindungsgemäß wird diese Aufgabe gelöst durch eine Abdeckung gemäß Anspruch 1. Dabei sind Rückwand und Trogsteg jedes Trogs als ein Kunststoff- oder Metallprofil ausgebildet und von jeder Rückwand steht oben ein Dichtungssteg ab, welcher diffusionsoffen an den darüber liegenden Trog anschließt. Das Kunststoff- oder Metallprofil ist entweder als Stranggussprofil oder als geformtes Blechprofil auf einfache Weise herstellbar, wobei Rückwand, Trogsteg und Dichtungssteg in einem Arbeitsgang erzeugt werden. Der Trogsteg ist der von der Rückwand abstehende Steg, welcher mit der Rückwand gemeinsam Wände und Grund eines Trogs bilden.

Der kostengünstig herstellbare Trog ist als Pflanztrog zur Aufnahme verschiedenster Pflanzen mit oder ohne Substrat geeignet. Die Pflanzen und gegebenenfalls ein Substrat speichern Wasser und entlasten somit die Kanalisation. Neben der Speicherfunktion bewirkt eine Bepflanzung zudem eine Reinigung des überschüssigen Wassers.
Zusätzlich zu einer Bepflanzung oder alternativ dazu ist der Trog zur Aufnahme einer Wasser klärenden Einlage vorgesehen. Eine solche Einlage ist beispielsweise in Form eines Granulats oder einer Matte als Schadstoff bindender Filter, als Katalysator und/oder als Substrat für Schadstoff abbauende Mikroorganismen ausgebildet.

Der Dichtungssteg schließt diffusionsoffen an den Trogsteg eines darüber angeordneten Trogs an, wodurch die Wand gegen Wassereintritt (z.B. Schlagregen) abgedichtet ist, aber dennoch Feuchtigkeit nach außen abgeben kann. Dadurch ist die erfindungsgemäße Abdeckung beispielsweise zur Sanierung von Wänden mit beschädigter Fassade einsetzbar. Die in einer Wand gespeicherte Feuchtigkeit wird durch die Abdeckung nach außen abgegeben und die abgedeckte Wand ist gegen weiteren Wassereintritt geschützt. Ebenso ist die Abdeckung für Neubauten mit diffusionsoffenen Außenwänden vorgesehen.

Dabei schließt erfindungsgemäß der Dichtungssteg eines Trogs in der Weise diffusionsoffen an den darüber liegenden Trog an, dass zwischen dem Dichtungssteg und dem Trogsteg des darüber angeordneten Trogs ein diffusionsoffenes Dichtungsband angeordnet ist. Ein derartiges Dichtungsband bewirkt einen zusätzlichen Schutz gegen Regen- bzw. Spritzwasser. Der Dichtungssteg bietet eine entsprechende Auflagefläche für das diffusionsoffene Dichtungsband.

Des Weiteren ist es von Vorteil, wenn der Dichtungssteg parallel zu dem an die Rückwand anschließenden Trogstegbereich verläuft. Zwischen den Trögen besteht dann ein Spalt konstanter Dicke, welcher mit einer bandförmigen diffusionsoffenen Dichtung ausgefüllt ist. Die Dichtung liegt dabei gleichmäßig mit einer ausreichenden Auflagefläche an dem Dichtungssteg und dem entsprechenden Trogsteg an und bewirkt auf diese Weise eine durchgehend sichere Abdichtung gegen Regen- bzw. Spritzwasser.

Der Querschnitt jedes Trogs ist vorteilhafterweise so gestaltet, dass jeder Trogsteg in Stegbereiche aufgeteilt ist, welche beiderseits des Troggrunds nach oben verlaufen. Der Troggrund ist somit von der Rückwand abgerückt, wodurch am Troggrund befindliches Wasser einfach abgleitet werden kann, ohne die wasserabweisende Funktion des diffusionsoffenen Anschlussbereichs zwischen zwei Trögen zu beeinträchtigen.

Dabei ist es günstig, wenn jeder Trogsteg durch eine Kante parallel zur Rückwand in zwei beiderseits des Troggrunds nach oben verlaufende Stegbereiche aufgeteilt ist. Eine so gebildete V-förmige Rinne ist einfach herzustellen und verbessert die Feuchtigkeitsspeicherung in einem Pflanzsubstrat oder einer Wasser klärenden Einlage.

Eine vorteilhafte Geometrie eines solchen Trogs ist gegeben, wenn die Rückwand und der an die Rückwand anschließende Trogstegbereich einen Öffnungswinkel zwischen 90° und 150° aufweisen und wenn die Rückwand mit dem anderen vom Troggrund nach oben verlaufenden Trogstegbereiche einen Öffnungswinkel von 30° bis 85° einschließt. Somit kann einerseits eine ausreichende Menge Pflanzsubstrat oder einer Wasser klärenden Einlage in einem Trog eingebracht werden. Andererseits weist bei mehreren übereinander angeordneten Trögen jeder Trog nach vorne hin eine ausreichend große Öffnung für eine Regenbewässerung und Sonnenbestrahlung einer Bepflanzung auf.

Zur gleichmäßigen Verteilung von Regenwasser ist es von Vorteil, wenn jeder Trogsteg im Bereich oberhalb des Troggrunds Öffnungen zur Wasserableitung aufweist. Sammelt sich in einem Trog zu viel Wasser, wird dieses über die Öffnungen an den darunter liegenden Trog abgegeben. Die Wandabdeckung wird dann günstigerweise zur Dachentwässerung genutzt. Somit werden für das von einem Pultdach abgeleitete Regenwasser Fallrohre und Sickerschächte überflüssig. Das Wasser rinnt in einen obersten Trog und wird über die Öffnungen an die darunter liegenden Tröge weitergeleitet, wobei jeder Trog eine Wasserspeicherfunktion übernimmt.

Für die Stabilität eines Trogs ist es vorteilhaft, wenn jeder Trogsteg im Bereich der oberen Kante und die zugehörige Rückwand im oberen Bereich mittels einer Klammer miteinander verbunden sind. Die Wandstärken der Rückwand und des Trogstegs sind mit einer solchen Klammer dünner ausführbar, wodurch Material gespart wird. Das führt zu einer billigeren Herstellung und infolge geringeren Gewichts zu einem einfacheren Transport und einer belastungsärmeren Wandverankerung der einzelnen Tröge.

Eine zusätzliche Stabilitätserhöhung eines Trogs wird erreicht, wenn jeder Trogsteg an der freien Kante eine Abkantung aufweist.

Dabei ist es günstig, wenn die Abkantung an der freien Kante des Trogstegs und der Dichtungssteg desselben Trogs mittels einer Klammer miteinander verbunden sind. Der Dichtungssteg ragt dabei gegebenenfalls über den Bereich, an dem eine Dichtung anliegt, hinaus, sodass die Klammer außerhalb dieses Bereichs mit dem Dichtungssteg verbindbar ist.

Günstig ist es des Weiteren, wenn die Klammer als pflanzendurchlässiges Gitter ausgeführt ist. Ein im Trog befindliches Pflanzsubstrat ist dann gegen Windverwehung geschützt, solange keine ausreichende Durchwurzelung vorliegt.

Alternativ dazu besteht die Option, jeden Trog mit einem separaten pflanzendurchlässigen Gitter abzudecken. Im letzteren Fall ist das Gitter einfacher gestaltet, weil keine Befestigungen zur Erfüllung eine Klammerfunktion erforderlich sind.

Das pflanzendurchlässige Gitter bietet zudem den Vorteil, dass eine Bepflanzung ab einer gewissen Pflanzenhöhe aufgrund des dadurch gegebenen Gewichts bzw. der Windangriffsflächen der herausragenden Pflanzenteile nicht aus dem Trog heraus fällt.

In einer weiteren Ausbildung der Erfindung ist vorgesehen, dass jeder Trog an den beiden Stirnseiten jeweils eine Seitenabdeckung aufweist. Die Abdeckung bedarf dann keines separaten seitlichen Abschlusses. Zudem besteht damit die Möglichkeit, mehrere nebeneinander angeordnete Tröge miteinander auf einfache Weise zu verbinden, beispielsweise mittels einer Schraub- oder Nietverbindung.

Dabei ist es vorteilhaft, wenn wenigstens zwei Tröge nebeneinander angeordnet sind und wenn zwischen den einander gegenüberliegenden Seitenabdeckungen ein Passstück zur fluchtenden Ausrichtung der wenigstens zwei Tröge angeordnet ist. Auf diese Weise ist sichergestellt, dass auch bei unregelmäßigen Wänden, insbesondere bei einer Anwendung zur Sanierung beschädigter Wände, eine einheitliche Struktur der Abdeckung ohne Versetzungen zwischen den einzelnen Trögen besteht.

Zur Nutzung der Abdeckung oder Teilen der Abdeckung als Frühbeet ist es günstig, wenn wenigstens zwei Tröge übereinander angeordnet sind und wenn der jeweils untere Trog vorne mit einer transparenten Abdeckung abgedeckt ist.

Die Erfindung wird nachfolgend in beispielhafter Weise unter Bezugnahme auf die beigefügten Figuren erläutert. Es zeigen in schematischer Darstellung:
- Fig. 1: Mehrere Tröge übereinander und nebeneinander an einer Wand angeordnet
- Fig. 2: Einfache Ausprägung eines Trogs im Schrägriss
- Fig. 3: Weiterentwickelte Ausprägung eines Trogs im Schrägriss
- Fig. 4: Schnitt durch Rückwand und Stege eines Trogs
- Fig. 5: Tröge mit Seitenabdeckung im Seitenriss
- Fig. 6: Verbindung zweier nebeneinander angeordneter Tröge

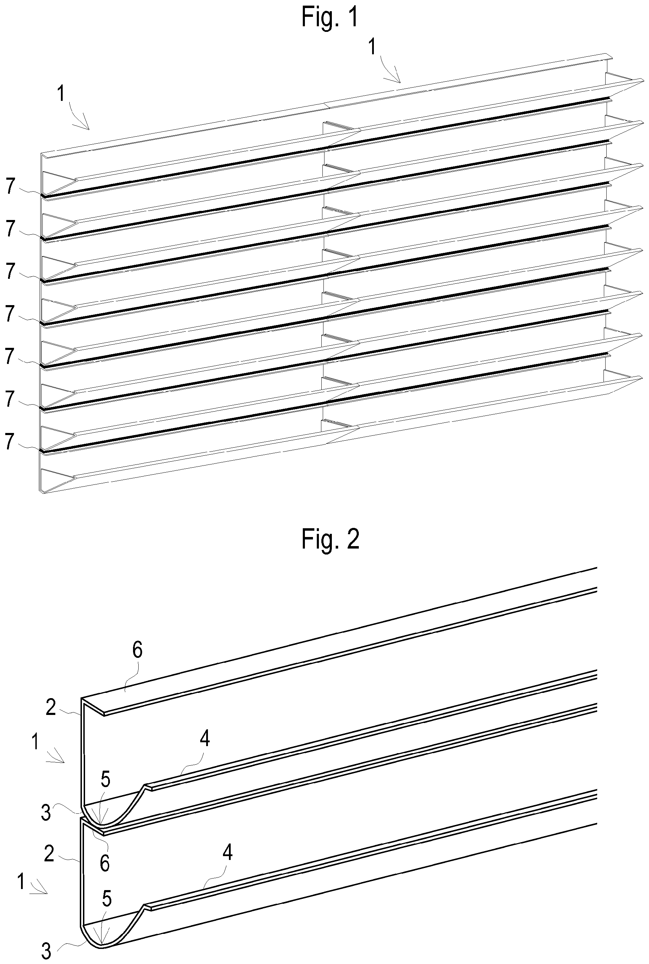

Die in Fig. 1 nebeneinander und übereinander dargestellten Tröge 1 decken eine Wand diffusionsoffen ab. Optional sind an den Anschlussstellen zwischen den Trögen 1 diffusionsoffene Dichtungen 7 angeordnet. Günstigerweise sind alle Tröge 1 baugleich ausgeführt. Die Wand ist in der Regel eine senkrechte Außenwand eines Gebäudes. Die erfindungsgemäße Abdeckung ist aber auch für andere Wände verwendbar, beispielsweise für senkrechte oder geneigte Lärmschutzwände oder Sichtschutzwände. Des Weiteren besteht die Möglichkeit einer Begrünung von Terrassengeländern.

Eine Abdeckung mit zwei übereinander angeordneten Trögen 1 einfacher Ausprägung ist in Fig. 2 dargestellt. Jeder Trog 1 ist als ein Metall- oder Kunststoffprofil ausgebildet. Besonders geeignet ist eine Ausprägung als stranggepresstes Aluminiumprofil. Ein solches weist die notwendige Festigkeit und Witterungsbeständigkeit auf. Das niedrige Gewicht im Vergleich zum ebenfalls möglichen Stahlblech erleichtert den Transport und bewirkt eine geringe Belastung einer Wandverankerung.

Das Profil eines Trogs 1 umfasst eine ebene Rückwand 2, die mit einer Wand verbindbar ist, beispielsweise mittels Schraub- oder Klebeverbindungen. Die Verbindung mit einer Wand kann auch mittels Einhängevorrichtungen erfolgen. Von der Rückwand 2 steht der Trogsteg 3 ab, der beispielsweise als runde Rinne ausgebildet ist, sodass eine obere Kante 4 des Trogstegs 3 höher als der Troggrund 5 des zugehörigen Trogs 1 liegt.

Am oberen Rand der Rückwand 2 jedes Trogs 1 ist der Dichtungssteg 6 für einen diffusionsoffenen Anschluss an einen darüber angebrachten Trog 1 vorgesehen. In der beispielhaften einfachen Ausprägung gemäß Fig. 2 berührt der Dichtungssteg 6 den Trogsteg 3 des darüber angeordneten Trogs 1 entlang einer Berührungslinie. Dabei weisen die Kontaktflächen des Dichtungsstegs 6 oder des Trogstegs 3 oder beider Stege 3, 6 eine ausreichende Rauheit auf, sodass an der Berührungslinie keine vollständige Abdichtung, sondern eine offenporige Zone besteht. Eine geeignete Rauheit kann beispielsweise durch Riffeln geschaffen werden. Die Berührungslinie zwischen zwei Trögen 1 stellt dann eine Zone dar, durch die Feuchtigkeit aus der Wand nach außen diffundieren kann. Die Wandabdeckung bleibt somit diffusionsoffen.

Die diffusionsoffene Zone weist eine offenporige Struktur auf und zeichnet sich dadurch aus, dass Feuchtigkeit durch diese Zone diffundieren kann, ohne dass dabei eine Luftströmung durch die Zone gegeben ist. Eine Diffusion findet statt, wenn die Zone zwei Bereiche unterschiedlicher Luftfeuchtigkeit trennt. Es gleicht sich also eine höhere Luftfeuchtigkeit im Bereich einer feuchten Wand an die geringere Luftfeuchtigkeit an der Außenseite der Wandabdeckung an, wodurch die Wand entfeuchtet wird.

Zudem ist die abgedeckte Wand gegen Regen- bzw. Spritzwasser geschützt, wobei das freie Ende des Dichtungsstegs 6 optional eine Abtropfkante bildet. Alternativ dazu kann der Trogsteg 3 im Anschlussbereich nicht gerundet, sondern abgekantet sein. Ebenso ist es möglich, im Anschlussbereich den Trogsteg 3 eben und den Dichtungssteg 6 gerundet oder abgekantet auszubilden. Infolge einer dünnwandigen Ausführung der Stege 3, 6 sind diese federnd gegeneinander gedrückt. Fertigungstoleranzen oder Wärmeausdehnung der Tröge 1 werden dadurch ausgeglichen. Die Erfindung sieht vor, dass zwischen einem Dichtungssteg 6 und einem darüber angeordneten Trogsteg 3 eine diffusionsoffene Dichtung 7 angeordnet ist. Eine solche Dichtung 7 besteht aus einem offenporigen Material. Auf diese Weise können die Fertigungstoleranzen vergrößert werden, weil ein unregelmäßiger Spalt zwischen dem Dichtungssteg 6 und dem darüber liegenden Trogsteg 3 durch die flexible Ausdehnung der Dichtung 7 ausgeglichen wird. Zudem ist keine Rauheit der Stegoberflächen erforderlich. Die Dichtung ist als Fliesband oder als sonstiges Dichtungsband ausgeführt. Ein Dichtungsband kann für eine einfache Montage selbstklebend sein. Für einen zusätzlichen Spritzwasserschutz ist es sinnvoll, die von einer abgedeckten Wand abgewandte Seite der Dichtung mit einer wasserabweisenden Tränkung zu behandeln. Als Dichtungsmaterial kommt beispielsweise offenporiger Polyurithanweichschaumstoff zum Einsatz.

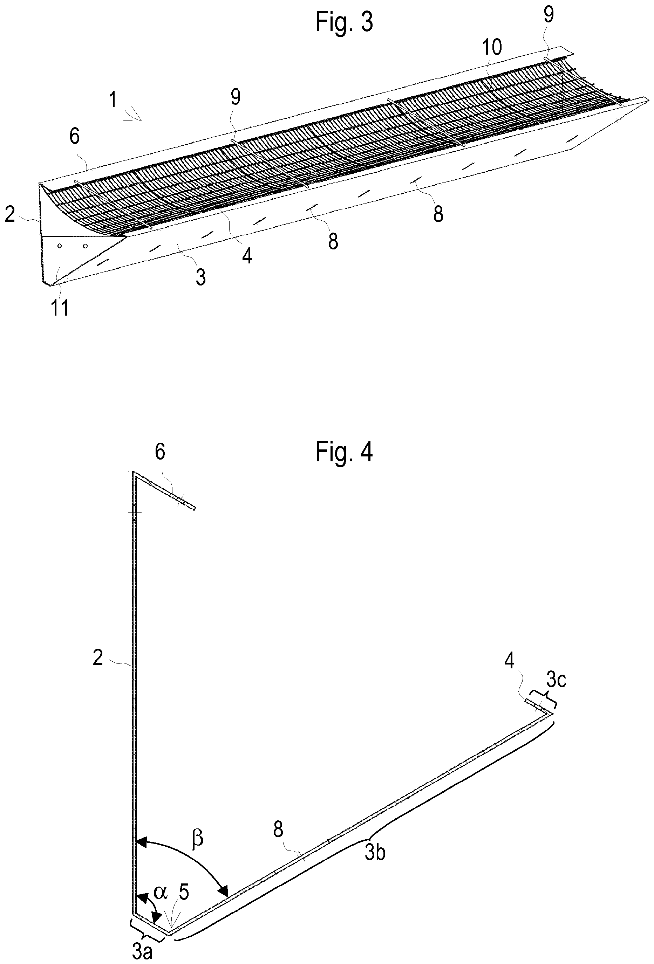

Um eine flächige Auflage einer bandförmigen Dichtung 7 zu erreichen, ist es sinnvoll, den Dichtungssteg 6 parallel zum Stegbereich des darüber angeordneten Trogstegs 3 auszubilden. Eine derartige Ausprägung ist in Fig. 3 dargestellt, wobei Fig. 4 einen Schnitt durch das Trogprofil zeigt. Bei diesem Beispiel weist jedes Trogprofil wiederum eine ebene Rückwand 2 auf. Von der Rückwand 2 steht ein in zwei Stegbereiche 3a, 3b aufgeteilter Trogsteg 3 ab, wobei die beiden Stegbereiche 3a, 3b beiderseits des linienförmigen Troggrunds 5 nach oben führen. Damit günstigerweise alle Trogprofile formgleich ausgeführt sind, verlaufen alle an die jeweilige Rückwand 2 anschließende Trogstegbereiche 3a und alle Dichtungsstege 6 parallel zueinander.

Der Öffnungswinkel a, den die Rückwand 2 und der an die Rückwand 2 anschließende Trogstegbereich 3a einschließen, beträgt z.B. 120°. Der Öffnungswinkel β, den die Rückwand 2 mit dem anderen vom Troggrund 5 nach oben verlaufenden Trogstegbereich 3b einschließt, beträgt z.B. 60°. Der Dichtungssteg 6 verläuft ebenso wie eine Abkantung 3c am freien Ende des Trogstegs 3 parallel zu dem an die Rückwand 2 anschließenden Trogstegbereich 3a.

In der Rückwand sind Bohrungen zur Montage an einer Wand vorgesehen. Der Trogsteg 3 weist mehrere Öffnungen 8 auf, durch die überschüssiges Wasser abgeleitet wird. Am Dichtungssteg 6 und an der Abkantung 3c befinden sich Bohrungen, in die Klammern 9 zur Stabilitätserhöhung montierbar sind. In den Ichsen, die von der Rückwand 2 und dem Dichtungssteg 6 sowie dem äußeren Trogstegbereich 3b und seiner Abkantung 3c gebildet werden, ist ein pflanzendurchlässiges Gitter 10 gehalten. Für dieses Gitter 10 ist keine zusätzliche Befestigung erforderlich.

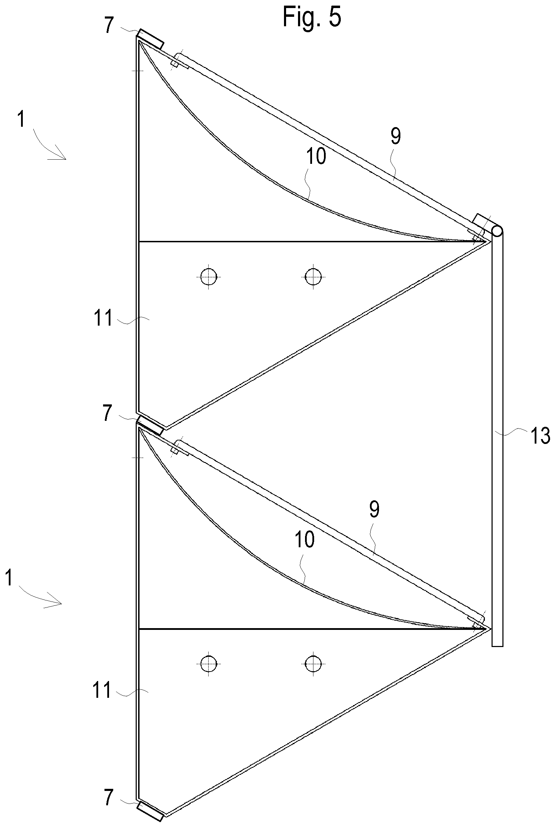

Fig. 5 zeigt zwei übereinander angeordnete Tröge 1 gemäß Fig. 3 bzw. 4 in einer Seitenansicht. Zwischen den Trögen 1 ist eine diffusionsoffene Dichtung 7 angeordnet, wobei diese einerseits auf dem Dichtungssteg 6 des einen Trogs 1 und andererseits auf dem an die Rückwand 2 des darüber liegenden Trogs 1 anschließenden Trogstegbereich 3a anliegt. Die Dichtung 7 ist günstigerweise so beschaffen, dass sie in einem komprimierten Zustand in dem jeweiligen Spalt zwischen den Trögen 1 angeordnet wird. Nachdem die Tröge 1 an der abzudeckenden Wand fixiert sind, dehnt sich die Dichtung aus und schließt den Spalt diffusionsoffen ab.

Bei einer Wandabdeckung mit mehreren übereinander angeordneten Trögen 1 ist optional ein unterer Trog 1 vorne mit einer transparenten Abdeckung 13 abgedeckt. Der obere Rand diese Abdeckung 13 ist beispielsweise mit einem Scharnier an der vorderen Kante des oberen Trogs 1 montiert und der untere Rand der Abdeckung 13 liegt an der vorderen Kante des unteren Trogs 1 an. Der untere Trog 1 ist auf diese Weise als Frühbeet nutzbar, wobei die Abdeckung 13 zur Pflanzenaussaat und zur Pflanzenpflege hochklappbar ist.

An den Stirnseiten sind die Tröge 1 jeweils mit einer Seitenabdeckung 11 abgeschlossen. Gegebenfalls ist darüber hinaus eine seitliche Abdeckung eines als Frühbeet genutzten Trogs 1 vorzusehen. Werden die Tröge 1 in einer Mauernische mit einer der Troglänge entsprechenden Nischenbreite montiert, können diese seitliche Abdeckungen 11 entfallen bzw. durch seitlich vertikal verlaufende Blechstreifen zum Schutz der Mauer ersetzt werden.

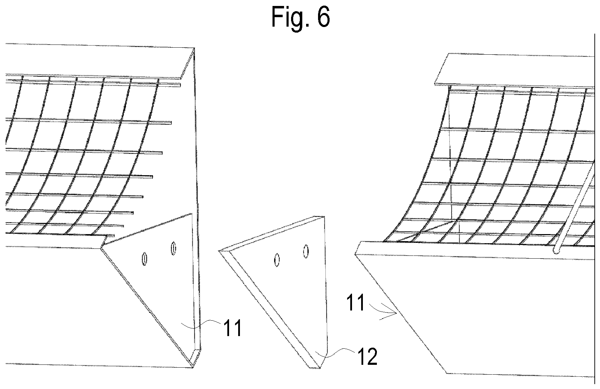

Die Seitenabdeckungen 11 schließen günstigerweise nicht mit dem Trogprofil ab, sondern sind geringfügig nach innen versetzt. Wie in Fig. 6 in einer Explosionsdarstellung gezeigt, ist dann zwischen zwei seitlich nebeneinander angeordneten Trögen 1 ein Freiraum ausgebildet, in dem ein Passstück 12 eingesetzt ist. An diesem Passstück 12 liegen die stirnseitigen Ränder beider Trogprofile, insbesondere der Trogstege 3, flächig an, sodass diese fluchtend ausgerichtet sind.

Selbstverständlich können die für eine Wandabdeckung verwendeten Trogprofile andere als in den Figuren dargestellte Querschnitte aufweisen. Es ist lediglich erforderlich, dass der Trogsteg 3 in der Weise gestaltet ist, dass der Trog 1 eine ausreichende Menge Pflanzsubstrat bzw. eine Wasser klärende Einlage aufnimmt und dass mit dem Dichtungssteg 6 eines darunter angeordneten Trogs 1 ein diffusionsoffener Anschluss vorliegt.

## Patentansprüche

1. Abdeckung für eine Wand mit wenigstens zwei Trögen (1), wobei jeder Trog (1) eine mit der Gebäudewand verbindbare Rückwand (2) und einen abstehenden Trogsteg (3) umfasst und wobei eine obere Kante (4) des Trogstegs (3) höher liegt als der Troggrund (5) des zugehörigen Trogs (1), wobei Rückwand (2) und Trogsteg (3) jedes Trogs (1) als ein Kunststoff- oder Metallprofil ausgebildet sind und wobei von jeder Rückwand (2) oben ein Dichtungssteg (6) absteht, **dadurch gekennzeichnet, dass** der Dichtungssteg diffusionsoffen an den darüber liegenden Trog (1) anschließt, indem zwischen dem Dichtungssteg (6) eines Trogs (1) und dem Trogsteg (3) des darüber angeordneten Trogs ein diffusionsoffenes Dichtungsband (7) angeordnet ist.

2. Abdeckung nach Anspruch 1, **dadurch gekennzeichnet, dass** der Dichtungssteg (6) parallel zu dem an die Rückwand anschließenden Trogstegbereich verläuft.

3. Abdeckung nach Anspruch 1 oder 2, **dadurch gekennzeichnet, dass** jeder Trogsteg (3) in Stegbereiche (3a, 3b) aufgeteilt ist, welche beiderseits des Troggrunds (5) nach oben verlaufen.

4. Abdeckung nach Anspruch 3, **dadurch gekennzeichnet, dass** das jeder Trogsteg (3) durch eine Kante parallel zur Rückwand (2) in zwei beiderseits des Troggrunds (3) nach oben verlaufende Stegbereiche (3a, 3b) aufgeteilt ist.

5. Abdeckung nach Anspruch 4, **dadurch gekennzeichnet, dass** jede Rückwand (2) und der an die Rückwand (2) anschließende Trogstegbereich (3a) einen Öffnungswinkel (a) zwischen 90° und 150° aufweisen und dass jede Rückwand (2) mit dem anderen vom Troggrund (5) nach oben verlaufenden Trogstegbereiche (3b) einen Öffnungswinkel (ß) von 30° bis 85° einschließt.

6. Abdeckung nach einem der Ansprüche 1 bis 5, **dadurch gekennzeichnet, dass** jeder Trogsteg (3) im Bereich oberhalb des Troggrunds (5) Öffnungen (8) zur Wasserableitung aufweist.

7. Abdeckung nach einem der Ansprüche 1 bis 6, **dadurch gekennzeichnet, dass** jeder Trogsteg (3) im Bereich der oberen Kante (4) und die zugehörige Rückwand (2) im oberen Bereich mittels einer Klammer (9) miteinander verbunden sind.

8. Abdeckung nach einem der Ansprüche 1 bis 7, **dadurch gekennzeichnet, dass** jeder Trogsteg (3) an der freien Kante eine Abkantung (3c) aufweist.

9. Abdeckung nach Anspruch 8, **dadurch gekennzeichnet, dass** die Abkantung (3c) an der freien Kante eines Trogstegs (3) und der Dichtungssteg (6) mittels einer Klammer (9) miteinander verbunden sind.

10. Abdeckung nach Anspruch 7 oder 9, **dadurch gekennzeichnet, dass** die Klammer (9) als pflanzendurchlässiges Gitter ausgeführt ist.

11. Abdeckung nach einem der Ansprüche 1 bis 9, **dadurch gekennzeichnet, dass** jeder Trog (1) mit einem pflanzendurchlässigen Gitter (10) abgedeckt ist.

12. Abdeckung nach einem der Ansprüche 1 bis 11, **dadurch gekennzeichnet, dass** jeder Trog (1) an den beiden Stirnseiten jeweils eine Seitenabdeckung (11) aufweist.

13. Abdeckung nach Anspruch 12, **dadurch gekennzeichnet, dass** wenigstens zwei Tröge (1) nebeneinander angeordnet sind und dass zwischen den einander gegenüberliegenden Seitenabdeckungen (11) ein Passstück (12) zur fluchtenden Ausrichtung der wenigstens zwei Tröge (1) angeordnet ist.

14. Abdeckung nach einem der Ansprüche 1 bis 13, **dadurch gekennzeichnet, dass** wenigstens zwei Tröge (1) übereinander angeordnet sind und dass der untere Trog (1) vorne mit einer transparenten Abdeckung (13) abgedeckt ist.

## Claims

1. Covering for a wall with at least two troughs (1), wherein each trough (1) comprises a rear wall (2) connectable to the building wall and a protruding trough strip (3) and wherein an upper edge (4) of the trough strip (3) is located higher than the trough base (5) of the associated trough (1), wherein the rear wall (2) and trough strip (3) of each trough (1) are formed as a plastic or metal section and wherein, at the top, a sealing strip protrudes (6) from each rear wall (2), **characterised in that** the sealing strip adjoins the trough (1) above it in a vapour-permeable manner, such that a vapour-permeable strip (7) is arranged between the sealing strip (6) of one trough (1) and the trough strip (3) of the trough arranged above it.

2. Covering according to claim 1, **characterised in that** the sealing strip (6) runs parallel to the trough strip area adjoining the rear wall.

3. Covering according to claim 1 or 2, **characterised in that** each trough strip (3) is divided into strip areas (3a, 3b) which run upwards on both sides of the trough base (5).

4. Covering according to claim 3, **characterised in that** (the) each trough strip (3) is divided by an edge parallel to the rear wall (2) into two strip areas (3a, 3b) running upwards on both sides of the trough base (3).

5. Covering according to claim 4, **characterised in that** each rear wall (2) and the trough strip area (3a) adjoining the rear wall (2) have an opening angle (α) of between 90° and 150° and that each rear wall (2) encloses an opening angle (β) of 30° to 85°with the other trough strip areas (3b) running upwards from the trough base (5).

6. Covering according to any one of claims 1 to 5, **characterised in that** each trough strip (3) has openings (8) in the area above the trough base (5) for water drainage.

7. Covering according to any one of claims 1 to 6, **characterised in that** each trough strip (3) is connected in the area of the upper edge (4) together with the associated rear wall (2) in the upper area by means of a brace (9).

8. Covering according to any one of claims 1 to 7, **characterised in that** each trough strip (3) has a fold (3c) on the open edge.

9. Covering according to claim 8, **characterised in that** the fold (3c) on the open edge of a trough strip (3) is connected to the sealing strip (6) by means of a brace (9).

10. Covering according to claim 7 or 9, **characterised in that** the brace (9) is executed as a mesh allowing plants to pass through.

11. Covering according to any one of claims 1 to 9, **characterised in that** each trough (1) is covered with a mesh allowing plants to pass through (10).

12. Covering according to any one of claims 1 to 11, **characterised in that** each trough (1) each has a side cover (11) on each end face.

13. Covering according to claim 12, **characterised in that** at least two troughs (1) are arranged side by side and a fitting piece (12) is arranged between the side covers (11) opposite each other for the correct alignment of the at least two troughs (1).

14. Covering according to any one of claims 1 to 13, **characterised in that** at least two troughs (1) are arranged one over the other and that the lower trough (1) is covered at the front with a transparent covering (13).

## Revendications

1. Recouvrement pour une paroi avec au moins deux auges (1), chaque auge (1) comprenant une paroi arrière (2) pouvant être reliée à la paroi du bâtiment et une traverse d'auge (3) saillante et une arête supérieure (4) de la traverse d'auge (3) étant plus élevée que le fond d'auge (5) de l'auge (1) afférente, la paroi arrière (2) et la traverse d'auge (3) de chaque auge (1) étant formées comme un profil en plastique ou en métal et une traverse d'étanchéité (6) dépassant en haut de chaque paroi arrière (2), **caractérisé en ce que** la traverse d'étanchéité est jointe à l'auge (1) sus-jacente de manière perméable à la vapeur grâce à une bande d'étanchéité (7) perméable à la vapeur disposée entre la traverse d'étanchéité (6) d'une auge (1) et la traverse d'auge (3) de l'auge disposée au-dessus.

2. Recouvrement selon la revendication 1, **caractérisé en ce que** la traverse d'étanchéité (6) est parallèle à la zone de traverse d'auge adjacente à la paroi arrière.

3. Recouvrement selon la revendication 1 ou 2, **caractérisé en ce que** chaque traverse d'auge (3) est divisée dans les zones de traverse (3a, 3b), lesquelles dépassent vers le haut les deux côtés du fond d'auge (5).

4. Recouvrement selon la revendication 3, **caractérisé en ce que** chaque traverse d'auge (3) est divisée par une arête parallèlement à la paroi arrière (2) dans deux zones de traverse (3a, 3b), lesquelles dépassent vers le haut les deux côtés du fond d'auge (3).

5. Recouvrement selon la revendication 4, **caractérisé en ce que** chaque paroi arrière (2) et la zone de traverse d'auge (3a) jointe à la paroi arrière (2) présentent une ouverture angulaire (a) entre 90° et 150° et **en ce que** chaque paroi arrière (2) comprend une ouverture angulaire (β) de 30° à 85° avec l'autre zone de traverse d'auge (3b) s'étendant vers le haut du fond d'auge (5).

6. Recouvrement selon l'une quelconque des revendications 1 à 5, **caractérisé en ce que** chaque traverse d'auge (3) présente des ouvertures (8) dans la zone en dessus du fond d'auge (5) destinées à l'évacuation de l'eau.

7. Recouvrement selon l'une quelconque des revendications 1 à 6, **caractérisé en ce que** chaque traverse d'auge (3) dans la zone de l'arête supérieure (4) et la paroi arrière (2) afférente dans la zone supérieure sont raccordées l'une à l'autre au moyen d'une attache (9).

8. Recouvrement selon l'une quelconque des revendications 1 à 7, **caractérisé en ce que** chaque traverse d'auge (3) présente un chanfrein (3c) sur l'arête libre.

9. Recouvrement selon la revendication 8, **caractérisé en ce que** le chanfrein (3c) sur l'arête libre d'une traverse d'auge (3) et la traverse d'étanchéité (6) sont raccordées l'une à l'autre au moyen d'une attache (9).

10. Recouvrement selon la revendication 7 ou 9, **caractérisé en ce que** l'attache (9) est réalisée comme une grille perméable aux végétaux.

11. Recouvrement selon l'une quelconque des revendications 1 à 9, **caractérisé en ce que** chaque auge (1) est recouverte d'une grille perméables aux végétaux (10).

12. Recouvrement selon l'une quelconque des revendications 1 à 11, **caractérisé en ce que** chaque auge (1) présente respectivement un recouvrement latéral (11) sur les deux faces avant.

13. Recouvrement selon la revendication 12, **caractérisé en ce qu'**au moins deux auges (1) sont disposées l'une à côté de l'autre et **en ce qu'**une pièce d'adaptation (12), destinée à l'alignement des au moins deux auges (1), est disposée entre les recouvrements latéraux (11) mutuellement opposés.

14. Recouvrement selon l'une quelconque des revendications 1 à 13, **caractérisée en ce qu'**au moins deux auges (1) sont disposées l'une sur l'autre et **en ce que** l'auge (1) inférieure est recouverte devant avec un revêtement transparent (13).
